# EUROPÄISCHE PATENTANMELDUNG

(11) **EP 2 272 336 A1**
(43) Veröffentlichungstag der Anmeldung: **12.01.2011**
(21) Anmeldenummer: 10006909.5
(22) Anmeldetag: 05.07.2010
(51) Int. Cl.: A01L 7/04

(54) **Stollensystem für Hufeisen**

(30) Priorität: 06.07.2009 DE 102009031996
(71) Anmelder: Breu, Helmut, 87437 Kempten (DE)
(72) Erfinder: Breu, Helmut, 87437 Kempten (DE)
(74) Vertreter: Hoppe, Lars

(57) **Zusammenfassung**

Die vorliegende Erfindung betrifft ein Stollensystem für Hufeisen (1), aufweisend wengistens einen Stollen (2) mit Arretierelementen (3) und wenigstens ein Hufeisen (4) mit komplementären Arretiergegenelementen (5), wobei die Arretiergegenelemente (5) als längliche Durchgangsöffnung ausgebildet sind, die an einer Stirnseite (6) des Hufeisens (4) offen ausgebildet ist oder die Arretiergegenelemente (5) als an einer Stirnseite (6) offene Nut (9), insbesondere Schwalbenschwanznut, im Hufeisen (4) ausgebildet sind, sowie einen Schmiedeschlitten hierfür.

Um ein einfach konstruiertes Stollensystem anzugeben, dessen Stollen sich unaufwendig ein- und ausbauen lassen, schlägt die Erfindung vor, dass die Arretiergegenelemente (5) für die Arretierelemente (3) von einer Stirnseite (6) und von einer Längsseite (7) des Hufeisens (4) aus zugänglich sind und eine kontinuierliche Verstellbarkeit einer Arretierposition (8) der Stollen (2) ermöglichen.

## Beschreibung

Die vorliegende Erfindung betrifft ein Stollensystem für Hufeisen, aufweisend wenigstens einen Stollen mit Arretierelementen und wenigstens ein Hufeisen mit komplementären Arretiergegenelementen, wobei die Arretiergegenelemente als längliche Durchgangsöffnung ausgebildet sind, die an einer Stirnseite des Hufeisens offen ausgebildet ist oder die Arretiergegenelemente als an einer Stirnseite offene Nut, insbesondere Schwalbenschwanznut, im Hufeisen ausgebildet sind,

Zur Verbesserung der Stabilität auf weichen Böden werden bislang Hufeisen in der Regel mit Stollen versehen. Diese Stollen werden mittels Schraubverbindungen lösbar mit den Hufeisen verbunden. Hierzu weisen die Stollen einen Gewindeabschnitt auf, der in einen komplementären Innengewindeabschnitt am Hufeisen eingreift. Dieses bekannte System ist mit großen Nachteilen verbunden, da sich beispielsweise die freien Innengewinde an den Hufeisen zusetzen oder durch eingedrückte Steine beschädigt werden können. Darüber hinaus sind Montage und Demontage des Stollens am Pferdefuß vorzunehmen, wodurch größere Hebelkräfte auf das empfindliche Gelenksystem des Pferdes ausgeübt werden. Dies ist unangenehm für das Pferd und körperlich anstrengend für den Reiter und kann zur Unduldsamkeit und damit zur körperlichen Gefährdung des Reiters führen.

Die DE 102 61 085 A1 offenbart einen Stollen, der über eine Rastverbindung mit einem Hufeisen verbindbar ist. Hierzu weist der Stollen zwei Rastelemente aus Metall und ein zwischen diesen angeordnetes Federelement aus Gummi auf, welche in einer im wesentlichen senkrecht zur Längsachse des Stollens verlaufenden Querbohrung angeordnet sind. Die Rastelemente sind gegen die Kraft des Federelementes sehr schwach nachgiebig gelagert, der Widerstand beim Einsetzen der Stollen in das Hufeisen ist nur schwer zu überwinden, so dass der Stollen dauerhaft sicher in dem Hufeisen sitzt. Nachteilig an diesem Stollen ist die aufwendige Konstruktion der Rastvorrichtung, die eine mehrstufige Montage erforderlich macht. Dieser bekannte Raststollen wird in eine Bohrung im Hufeisen eingesetzt und dort verrastet.

Eine andere rastende Verbindung ist aus der DE G 90 03 985.8 bekannt, bei der im Hufeisen Langlöcher vorgesehen sind, in die ein Steg des Stollens eingreift. Der Stollen weist weiterhin zwei scherenartige Stege auf, die das Hufeisen auf seiner Außen- und Innenseite umgreifen. Aufgrund dieses Umgreifens ist eine nachträgliche Montage am Huf schwierig. Er kann jedoch an unterschiedlichen Stellen am Hufeisen befestigt werden.

Einen völlig anderen Weg zur Haltverbesserung auf weichen Böden beschreitet die GB 278,873, bei der die Unterseite des Hufeisens eine Profilierung in Form von unterschiedlich tief ausgebildeten Längsnuten aufweist.

Schließlich ist aus der US 976,408 ein Stollensystem bekannt, bei dem das Hufeisen im Zehen- und im Fersenbereich eine Materialverstärkung aufweist, in die jeweils eine Schwalbenschwanznut als Längsnut eingebracht ist. Die jeweiligen Schwalbenschwanznuten laufen über ihre Länge konisch zu, so daß sich die Nutweite über den Verlauf der Nut ändert. In diese Nuten ist jeweils ein Stollen eingesetzt, der an genau einer einzigen, passenden Stelle aufgrund der sich verengenden Nutweite verkeilbar ist. Nachteilig an diesem Stand der Technik sind die aufwändige Hufform mit Materialverstärkung und die geringe Variabilität der Stollenposition.

Es ist daher Aufgabe der vorliegenden Erfindung, ein einfach konstruiertes Stollensystem anzugeben, dessen Stollen sich unaufwendig an mehr als einer Stelle im Hufeisen ein- und ausbauen lassen.

Diese Aufgabe wird dadurch gelöst, dass die Arretiergegenelemente für die Arretierelemente von einer Stirnseite und von einer Längsseite des Hufeisens aus zugänglich sind und eine kontinuierliche Verstellbarkeit einer Arretierposition der Stollen ermöglichen. Mit großem Vorteil erhöht die Erfindung so die Zugänglichkeit der Arretiergegenelemente für die Arretierelemente, so dass diese an der jeweils adäquaten Stelle mit den Arretiergegenelementen in Verbindung gebracht werden können. Aufgrund der Erfindung besteht nicht länger die Schwierigkeit eines Verkantens beim Eindrehen des Stollens in das Innengewinde des Hufeisens oder das Erfordernis der vorherigen Reinigung des Innengewindes. Ein eventuell zugesetztes Arretiergegenelement kann durch eine einfache Bürstbewegung in Richtung der offenen Stirnseite hin gereinigt werden. Der hierfür nötige Hufkratzer mit Bürste liegt jedem Reiter vor. Ein weiterer äußerst großer Vorteil der Erfindung ist die kontinuierliche Verstellbarkeit der Arretierposition des Stollens innerhalb der Grenzen der Arretiergegenelemente. Dies erlaubt die Einführung von mehr als einem Stollen pro Arretiergegenelement und damit pro Hufseite sowie die Möglichkeit, die Arretierposition des Stollens je nach Anforderung zu verschieben, beispielsweise eher hufmittig oder eher hufendseitig anzuordnen.

Diese Vorteile verwirklichen sich besonders dann, wenn die Arretierelemente in die Arretiergegenelemente einführbar ausgebildet sind. Diese Ausführung führt zu einer besonders festen und sicheren Verbindung von Stollen und Hufeisen unter Beibehaltung der weitestgehend freien Wahl der späteren Arretierposition des Stollens an dem Hufeisen.

Es ist vorgesehen, dass die Arretiergegenelemente als längliche Durchgangsöffnung im Hufeisen ausgebildet sind, wobei die längliche Durchgangsöffnung an einer Stirnseite des Hufeisens offen ausgebildet ist. Diese Ausgestaltung der Arretiergegenelemente als längliche Durchgangsöffnung führt letzten Endes zu zwei freien Schenkeln pro Hufeisenende, mithin zu einer frackschoßartigen Teilung des Hufeisens. Dies ist die konstruktiv einfachste Form eines erfindungsgemäßen Arretiergegenelementes, bei dem die Vorteile der freien Wahl der Arretierposition innerhalb der Grenzen des Arretiergegenelementes verwirklichbar sind. Eine solche Durchgangsöffnung entspricht im Grunde einem Langloch, das an einer Schmalseite nicht von Material umgeben ist. In diesem Falle wäre das Horn des Hufes in dem kleinen Bereich der länglichen Durchgangsöffnung nicht geschützt. Aus dem Stand der Technik ist bekannt, die Arretiergegenelemente jeweils als an einer Stirnseite offene Nut, insbesondere Schwalbenschwanznut im Hufeisen auszubilden. Eine solche Nut lässt sich noch immer einfach in das Hufeisen fräsen oder stanzen oder allgemein einbringen. Selbst bei der Handfertigung eines Hufeisens stellt diese Ausführungsform eine einfach zu verwirklichende konstruktive Maßnahme dar. Die erfindungsgemäße einfache stirnseitige Einführung des Stollens in das erfindungsgemäße Hufeisen ist noch stets genauso möglich, wie die längsseitige Einführung. Bei dieser Ausführungsform ist der Pferdehuf allseitig durch Eisen geschützt.

Dadurch, dass die Arretiergegenelemente der Krümmung des Hufeisens mehr oder weniger folgend gebogen ausgebildet sind, ergibt sich mit besonderem Vorteil eine besonders lange Strecke, innerhalb der die erfindungsgemäße kontinuierliche Verstellbarkeit der Arretierposition des Stollens möglich ist. Unter mehr oder weniger folgend versteht die Erfindung, dass die Nut gerade ausgebildet ist, oder aber mehr oder weniger gekrümmt. Hierbei ist darauf zu achten, dass der Krümmungsradius im Fall der gekrümmten Nut in etwa dem Krümmungsradius des Hufeisens folgt. Die Verschiebbarkeit der erfindungsgemäßen Stollen innerhalb dieser gebogenen Nut ist, wie weiter unten noch auszuführen sein wird, stets gegeben. Die erfindungsgemäß gebogene Nut hat den Vorteil, dass die Stollen näher zur Hufmitte angeordnet werden können, was bei bestimmten Situationen wünschenswert ist.

Beträgt die Tiefe der Nut <=60% der Dicke des Hufeisens, so ist stets eine ausreichende mechanische Festigkeit des Hufeisens bei gleichzeitiger ausreichender Befestigungsmöglichkeit für den Stollen mit Arretierelementen gegeben. Weiterhin wird eine so dimensionierte Nut bei der Anpassung des Hufeisenrohlings an den Pferdefuß möglichst wenig in ihren Maßen verändert und gewährleistet so den stets sicheren Betrieb.

In Ausgestaltung der Erfindung ist vorgesehen, dass das Arretierelement eines Stollens einen T-förmigen Querschnitt mit zwei freien Arretierenden aufweist, wobei die beiden freien Arretierenden einstückig miteinander verbunden sind. Dies ist besonders einfach und stabil und führt zur sicheren Befestigung des Stollens am Hufeisen. Eine aufwendige mehrteilige Konstruktion wie aus dem Stand der Technik bekannt, wird mit Vorteil vermieden. Gleichzeitig ist die Stabilität der freien Arretierenden besonders hoch.

Ist das Arretierelement eines Stollens stoffschlüssig mit dem Stollen verbunden ausgebildet, insbesondere als ein in eine Ausnehmung des Stollens eingebrachtes und dort beispielsweise durch Hartlöten oder einen Schweißpunkt stoffschlüssig mit dem Stollen verbundenes zylindrisches Element ausgebildet, ergeben sich zwei räumlich voneinander unterscheidbaren Positionen des Stollens, nämlich mit den Arretierenden koaxial zur Längsachse des Hufeisens und mit diesen senkrecht zur Längsachse des Hufeisens. Die erste Position ermöglicht aufgrund des erfindungsgemäß gewählten geringeren Querschnitts des Arretierabschnitts die einfache und leichte Verschieb- oder Verfahrbarkeit innerhalb der Nut oder aber der länglichen Durchgangsöffnung. Mit dieser Position kann der Stollen an jeder beliebigen Stelle entlang der Längsnut in diese eingeführt werden, also entlang der Längsseite des Hufeisens. Die eigentliche Einsetzbewegung am Huf erfolgt dann von der Hufunterseite her in die Nutöffnung, aber eben irgendwo entlang der mehr oder weniger parallel zur Längsseite des Hufeisens verlaufenden Längsausdehnung der Nut. Die zweite Position des Stollens wird von diesem an der Arretierposition relativ zum Hufeisen eingenommen. Diese zweite Position wird nach Einführung des Stollens in die Ausnehmung oder Nut entweder über eine Längsseite oder deren jeweils offene Stirnseite und der Verbringung an die gewünschte Arretierposition durch eine Vierteldrehung des Stollens erreicht. In der Verfahrposition sind die freien Arretierenden nicht in Kontakt mit dem Hufeisenmaterial. In der durch Vierteldrehung erreichbaren Arretierposition des Stollens drücken die beiden Arretierenden im Rahmen der Elastizität des Hufeisenmaterials gegen dasselbe. Erfindungsgemäß ist ebenfalls vorgesehen, dass der Druck, den die Arretierenden auf das Hufeisenmaterial ausüben, dessen Elastizitätsgrenze überschreiten darf. In diesem Fall wird das Hufeisenmaterial an dieser Stelle gestaucht, disloziert, komprimiert oder allgemein beschädigt. Dies wird erfindungsgemäß in Kauf genommen, da Hufeisen in der Regel nach drei bis vier Monaten ausgetauscht werden, so dass eine beschädigungslose Befestigung der Arretierelemente an den Arretiergegenelementen nicht erforderlich ist. Diese bewusste Inkaufnahme der Beschädigung des Hufeisens führt im Vergleich zum Stand der Technik zu einem wesentlich einfacher konstruierten Stollen. Die Arretierenden können dabei rund, oval oder im Querschnitt rechteckig ausgebildet und mit abgerundeten Ecken oder Kanten oder mit scharfen Ecken oder Kanten versehen sein. Vorzugsweise ist die Höhe desjenigen Teils des Stollens, der in den Arretiergegenelementen aufgenommen ist, geringer ausgebildet als die Tiefe derselben, so dass die Führung des Stollens innerhalb der Arretiergegenelementen erleichtert ist und selbst Verschmutzungen bis zu einem gewissen Grade die Verschiebbarkeit der Stollen nicht stören. Die Befestigung des zylindrischen oder rechteckigen oder quadratischen Arretierelements am Stollen kann auch mittels einer Durchtrittsbohrung erfolgen, in die dieses Element eingeführt und durch Schweißen oder Löten oder dergleichen befestigt wird. Wichtig ist hierbei, dass dieses Element möglichst weit unten am Stollen befestigt wird, um so ein Niederzugelement zu bilden.

In Ausgestaltung der Erfindung ist vorgesehen, dass der Stollen eine Stollenhülse und einen mit dieser, vorzugsweise mittels einer Schraubverbindung, lösbar verbindbaren Stollenfuß aufweist, wobei der Stollenfuß die Arretierelemente trägt. Diese erfindungsgemäße Zweiteilung des Stollens erlaubt mit ganz großem Vorteil die Verwendung unterschiedlicher Stollenhülsen und damit Stollenformen mit stets demselben Arretierelement. Dies reduziert die erforderliche Teileanzahl und vereinfacht die Lagerhaltung. Außerdem erlaubt diese erfindungsgemäße Ausgestaltung eines zweigeteilten Stollens grundsätzlich den Einsatz von mehr als einer Befestigungsart, wie beispielsweise Form- oder Kraftschluß, die die unterschiedlichen Stollenbestandteile unterschiedliche Arretierelemente tragen können. Die erfindungsgemäß aufgrund der konstruktiven Einfachheit bevorzugte Schraubverbindung kann ein Feingewinde, ein Trapezgewinde oder ein geschlitztes Gewinde aufweisen, letzteres zur bajonettartigen schnellen Einführung von Außen- in Innengewinde und anschließenden Verdrehung um beispielsweise nur 90°. Denkbar wären auch eine reine Bajonettverbindung oder eine Rast- oder Schnappverbindung.

Weist der Stollenfuß im Bereich der Arretierelemente einen ersten, zum Querschnittsflächenumriß der Durchgangsöffnung oder Nut korrespondierenden Querschnittsflächenumriß auf und ist der zu diesem orthogonale zweite Querschnittsflächenumriß des Stollenfußes im Bereich der Arretierelemente in seiner größten Weite geringer ausgebildet als der Querschnittsflächenumriß der Durchgangsöffnung oder Nut in seiner jeweiligen geringsten Weite, so wird mit sehr großem Vorteil ein einfaches Arretierelement geschaffen, daß zwei unterscheidbare Durchmesser aufweist, die die beiden Relativ-Positionen des Stollens zum Hufeisen ermöglichen, nämlich die Einführ- und Verfahrposition einerseits sowie die Arretierposition andererseits. Im Unterschied zu der ersten erfindungsgemäßen Stollenform hat diese Ausführungsform den Vorteil, dass der Stollenfuß über einen wesentlich größeren Bereich, nämlich entlang der annähernd gesamten Nuttiefe in dem Hufeisenmaterial arretiert wird. Auch bei dieser Ausführungsform ist mit großem Vorteil sowohl ein Einführen über die offene Stirnseite der Nut mit großem oder kleinen Umriß und ein Einführen an beliebiger Stelle der Nutlängsseite mit dem kleinen Umriß und anschließendem Verschieben und verdrehendem Befestigen des Stollenfußes ermöglicht. Die beiden Querschnittsflächenumrisse beschreiben erfindungsgemäß mit anderen Worten einen besonders gestalteten Nutstein, der in der einen Orientierung an beliebiger Stelle entlang ihrer Längsausdehnung leicht über die Nutöffnung in die Nut einsetzbar und in ihr verfahrbar ist und der sich bei Verdrehung in die andere Orientierung in die beiden Nutwände einarbeitet.

Erfindungsgemäß ist vorgesehen, dass die Arretierung zwischen Stollen und Hufeisen form- und kraftschlüssig erfolgend ist. Dies stellt eine besonders haltbare und belastbare Verbindung zwischen Hufeisen und Stollen dar. Mit großem Vorteil erfolgt die erfindungsgemäße kraftschlüssige Verbindung dadurch, dass die Stollenhülse auf den Stollenfuß so aufgeschraubt wird, dass beide Bauteile zwischen sich das Hufeisen klemmen. Die erfindungsgemäße formschlüssige Verbindung beider Bauteile erfolgt beim letzten Anziehen der Schraubverbindung, bei dem sich der Stollenfuß mitdreht und sich hierbei mit seinem größeren Querschnittsflächenumriß, insbesondere den jeweiligen Kanten in das Hufeisenmaterial hineinarbeitet.

Mit besonders großem Vorteil ist erfindungsgemäß vorgesehen, dass Stollenhülse und Stollenfuß im Montagezustand zwischen sich eine Vorrichtung zur Erzeugung einer, der Schließbewegung entgegenwirkenden, Kraft aufnehmen, insbesondere einen gummielastischen Körper. Durch einen solchen Körper, beispielsweise einer Schrauben- oder Tellerfeder, einem Elastomerblock oder dergleichen wird beim Verbinden der beiden Bauteile auf das Gewinde eine gegenwirkende Kraft ausgeübt. Diese verspannt die beiden Stollenbauteile zueinander, so daß sie sich von alleine kaum voneinander lösen können. Sie sind so einfach außerhalb des Hufs von Hand vormontierbar und können im miteinander verbundenen Zustand leicht in die Nut oder Öffnung eingeführt werden, ohne sich voneinander zu trennen. Dies stellt eine ganz besonders wichtige Weiterbildung der Erfindung mit größtem praktischen Nutzen dar: Der Anwender kann sämtliche am Hufeisen zu montierenden Stollen bereits vormontiert bei sich tragen und diese schnell und einfach in das Hufeisen einsetzen und arretieren, wodurch Pferdebein und Pferd so wenig wie möglich belastet werden. Im einfachsten Fall ist dieser Körper ein Elastomerzylinder, der in den Grund der sacklochartigen Innengewindebohrung der Stollenhülse eingesetzt wird und dort von dem eindringenden Gewindestück des Stollenfußes zusammengedrückt wird.

Zu der Erfindung gehört auch ein in die Arretiergegenelemente einführbarer Schmiedeschlitten, dessen Querschnittsflächenumriß zu demjenigen der Arretiergegenelemente korrespondiert. Ein solcher erfindungsgemäßer Schmiedeschlitten stellt mit Vorteil sicher, daß die Innenmaße der Arretiergegenelemente während der Anpassung des Hufeisenrohlings an den jeweiligen Pferdefuß nicht durch Schmiedevorgänge verändert werden und die erfindungsgemäßen Stollen auch nach der individuellen Anpassung des Hufeisens durch den Hufschmied an jeder gewünschten Stelle in die Arretiergegenelemente einführbar und dort befestigbar bleiben. Mit anderen Worten verhindert der Schmiedeschlitten, dass die wuchtigen Schläge des Schmiedes auf das rotglühende Rohhufeisen während seiner Anpassung an den Pferdehuf zu einer Veränderung der Innenmaße der Nut führt. Der Schmiedeschlitten hat dabei beispielsweise eine trapezförmige oder eine rechteckige Querschnittsfläche, je nach Ausgestaltung des Arretiergegenelements und stellt einen länglichen Nutstein mit besonderer Ausgestaltung dar. Der Schmiedeschlitten erlaubt weiterhin mit ganz großem Vorteil die Verwendung handelsüblicher, bekannter Hufeisenrohlinge zur Einbringung der Nut/Durchgangsöffnung, so dass Sonderanfertigungen bezüglich der Materialstärke des Hufeisens wie aus dem Stand der Technik bekannt, entfallen können.

Besonders vorteilhaft ist die Weiterbildung des erfindungsgemäßen Schmiedeschlittens dahingehend, dass sich die Durchmesser der beiden Enden des länglichen Schmiedeschlittens unterscheiden. Der größere der beiden Durchmesser ist dabei so gewählt, dass er zu einer leichten Verspannung des eingeführten Schmiedeschlittens mit dem Hufeisen führt. Die Durchmesser von Nut und diesem Schlittenende bilden also mindestens eine Übergangspassung, jedoch ist auch eine Presspassung erfindungsgemäß. Diese Ausgestaltung verhindert mit großem Vorteil eine unerwünschte, weil nutmaßgefährdende, Trennung von Schmiedeschlitten und Hufeisen während dessen Anpassung an den Pferdehuf.

Selbst bei handwerklicher Herstellung des Hufeisens durch einen Hufschmied sind solche Arretiergegenelemente besonders in Form einer länglichen Durchgangsöffnung einfach herstellbar. Selbst die Einbringung einer Nut oder Schwalbenschwanznut kann durch die Anwendung entsprechender Schablonen leicht erfolgen.

Die äußere Stollenform und die Stollenhöhe sind im Rahmen der Erfindung frei wählbar, so dass für jeden Einsatzzweck der geeignete Stollen zur Verfügung steht.

Schließlich gehört zur Erfindung auch ein Hufeisen, das mindestens eine, an einer Stirnseite des Hufeisens offene Nut, insbesondere Schwalbenschwanznut, aufweist.

Ebenso gehört zur Erfindung ein Stollen, der einen im Querschnitt T-förmigen Arretierabschnitt aufweist, bei dem ein einstückiges Arretierelement stoffschlüssig unter Bildung zweier freier Arretierenden befestigt ist.

Die vorliegende Erfindung wird anhand eines Ausführungsbeispiels näher erläutert. Hierbei zeigen die Figuren der Zeichnung im einzelnen:
- Fig. 1a:: skizzenhaft eine Untersicht unter ein erfindungsgemäßes Hufeisen,
- Fig. 1b:: skizzenhaft einen Querschnitt durch ein erfindungsgemäßes Hufeisen im Bereich der Schwalbenschwanznut;
- Fig. 2 a,b:: skizzenhaft einen Längs- und einen Querschnitt durch einen erfindungsgemäßen Stollen mit T-förmigem Rastabschnitt.
- Fig. 3:: einen skizzenhaften Querschnitt durch ein erfindungsgemäßes Hufeisen im Bereich einer Schwalbenschwanznut mit montiertem Stollen
- Fig. 4:: einen skizzenhaften Querschnitt durch eine andere erfindungsgemäße Ausführungsform eines Stollens und
- Fig. 5.:: eine skizzenhafte Untersicht unter den Stollenfuß aus Fig. 4

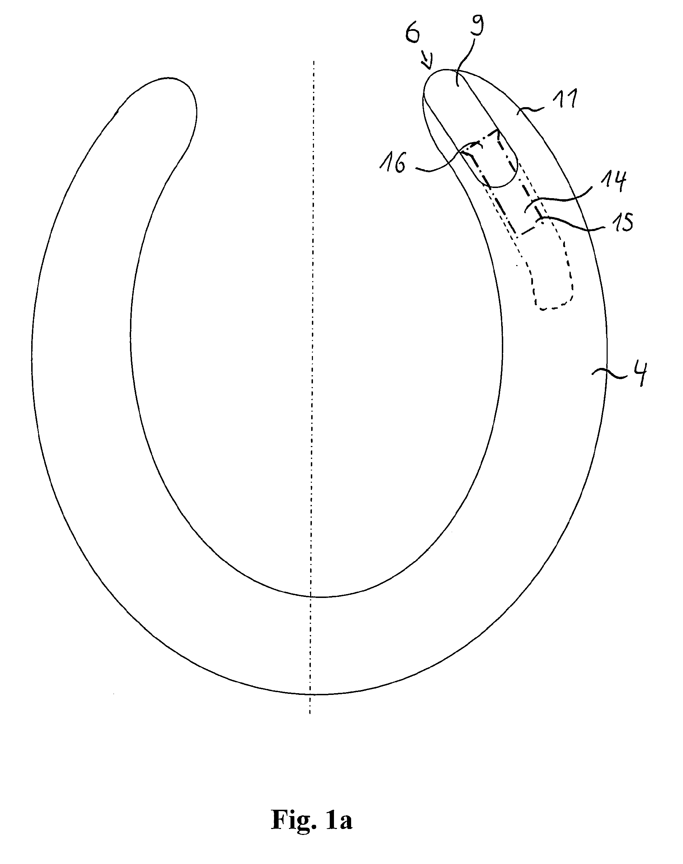

Figur 1a zeigt ein Hufeisen 4 in Untersicht. An den beiden freien Schenkeln 11 des Hufeisens 4 ist jeweils eine Nut 9 mit einer offenen Stirnseite 6 vorgesehen. Die Nut 9 kann an ihrer anderen Stirnseite gerundet ausgebildet sein, hierauf kommt es erfindungsgemäß nicht an. Gestrichelt ist die erfindungsgemäße Variante dargestellt, bei der die Nut 9 dem Bogen des Hufeisens 4 mehr oder weniger folgt. Eine solche Nut 9 kann beispielsweise eingefräst werden, was in der Regel einfacher sein dürfte, als sie einzuschmieden. Nicht dargestellt ist die Ausführungsform, bei der das Arretiergegenelement 5 als längliche Durchgangsöffnung ausgebildet ist. Die in Fig. 1a dargestellte Nutlänge beträgt 30 bis 35 mm und endet im hinteren geraden Bereich des Hufeisens an seinen offenen Schenkeln. Die längliche Nut 9 erlaubt eine hohe Variabilität der Positionierung des Stollens. Erfindungsgemäß könnte die Nut 9 länger ausgebildet sein, insbesondere gebogen, wie gestrichelt angedeutet. Eine gebogene Nut 9 hat den Vorteil, dass die Stollen näher zur Hufmitte angeordnet werden können. In diesen Bereich ist ebenfalls gestrichelt ein Schmiedeschlitten 14 eingezeichnet, dessen eines Ende 15 eine Spielpassung zur Nut 9 und dessen anderes Ende 16 eine Preßpassung oder Übergangspassung mit der Nutweite bilden. Durch diese Ausgestaltung ist ein nachteiliges Herausrutschen des Schmiedeschlittens 14 während des Schmiedevorganges verhindert. Nach dem Schmiedevorgang läßt sich der Schmiedeschlitten 14 leicht aus der Nut 9 austreiben. Nur aus Gründen der Übersichtlichkeit ist der Schmiedeschlitten 14 so weit in der Nut 9 dargestellt, er wird üblicherweise in deren Anfangsbereich liegen und in der Länge so gewählt sein, dass er der Nutlänge in etwa entspricht, beispielsweise 35 mm lang sein.

Aufgrund der Ausbildung der Stollen mit T-förmigem Arretierelement können diese der Krümmung des Hufeisens und damit der Krümmung der Nut 9 ohne Verkanten leicht folgen, falls sie von der offenen Seite der Nut 9 her eingeführt und in ihr verschoben werden. Die erfindungsgemäßen Stollen können ebenso über eine der Längsseiten 7 der Nut 9 eingeführt werden, sofern der Einführende die freien Arretierenden koaxial zur Längsachse der Nut 9 hält, da die erfindungsgemäßen Stollen entsprechend dimensioniert sind. Die sonstige Ausgestaltung des Hufeisens 4 entspricht dem Stand der Technik. Eine besondere Materialverdickung im Bereich der Nut 9 ist nicht vorgesehen oder erforderlich.

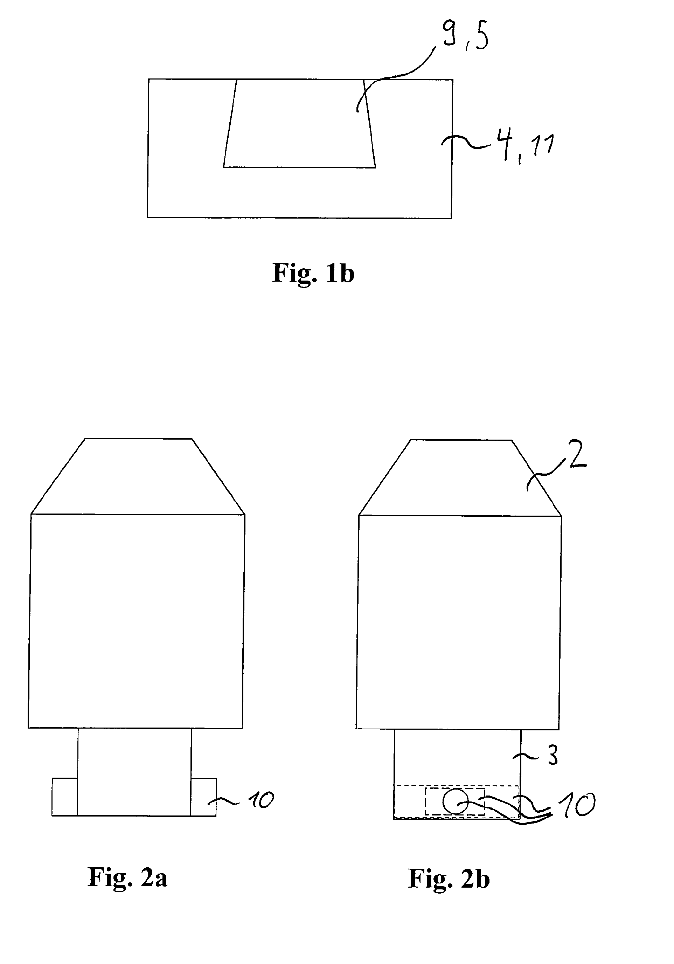

Figur 1b zeigt den Schnitt entlang der Linie I - I aus Figur 1a. Gut zu erkennen ist, dass die Nut 9 als Schwalbenschwanznut ausgebildet ist, deren Tiefe in etwa 60 % der Dicke des Hufeisens 4 beträgt.

Die Figuren 2a, b zeigen einen erfindungsgemäßen Stollen 2 in Seiten-und Frontansicht, dessen Arretierelement 3 T-förmig ausgebildet ist und zwei freie Arretierenden 10 aufweist. Diese sind hier stiftförmig ausgebildet, können jedoch auch rechteckig oder oval über Teile oder die gesamte Rastlänge ausgebildet sein. Sie sind im unteren Bereich des Stollens, möglichst dicht an dessen dem Hufeisen 4 zugewandten Ende angeordnet. Die äußeren Kanten der freien Arretierenden 10 sind abgerundet ausgebildet, um die ¼-Arretierbewegung zu erleichtern.

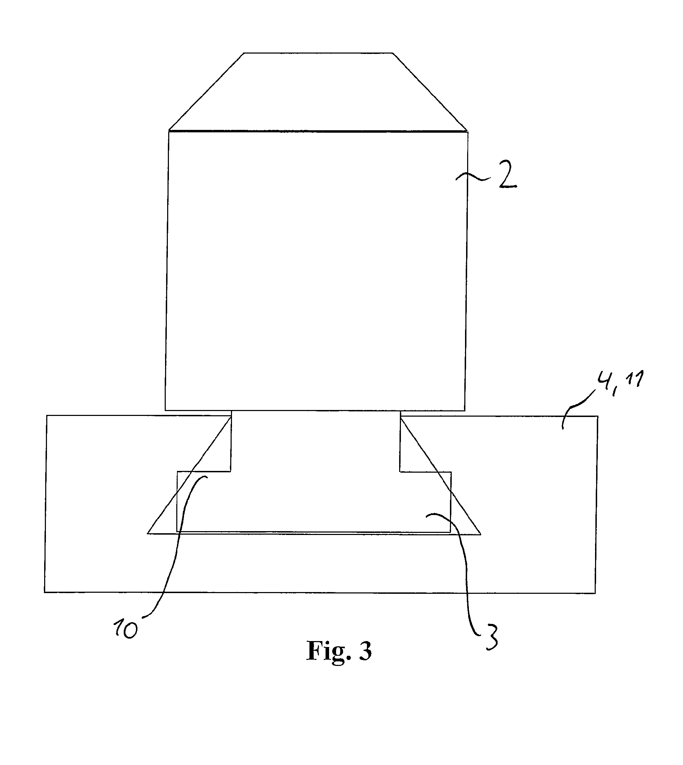

Figur 3 zeigt schließlich den montierten, arretierten Zustand des erfindungsgemäßen Stollens 2 im erfindungsgemäßen Hufeisen 4. Gut zu erkennen ist, dass die Arretierelemente 3 möglichst dicht am Nutgrund angeordnet sind, um den Stollen 2 in Richtung des Hufeisens 4 niederzuziehen und ihm einen sicheren Sitz zu ermöglichen. Hierzu trägt die Schwalbenschwanzform der Nut 9 bei.

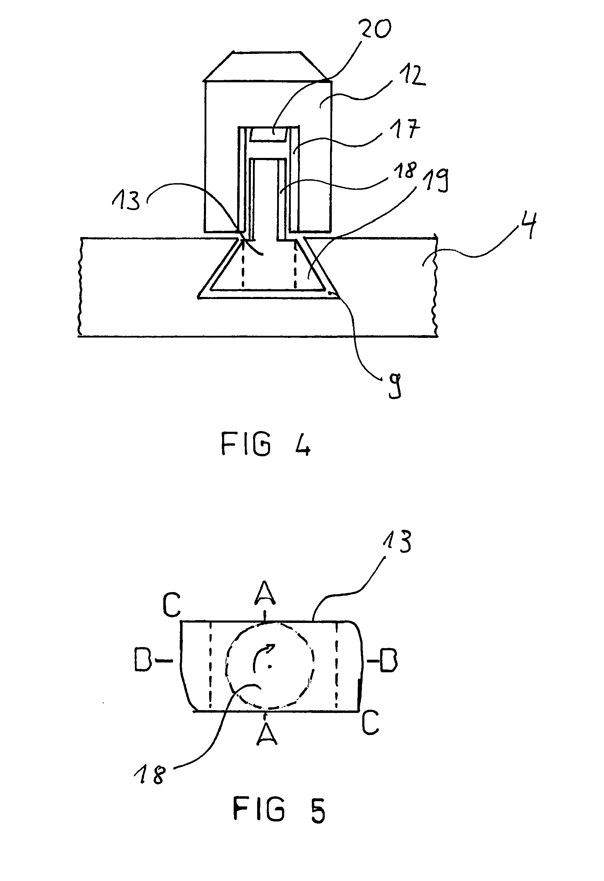

Fig. 4 zeigt skizzenhaft eine zweite erfindungsgemäße Ausführungsform eines Stollens 2. Dieser weist eine Stollenhülse 12 mit Innengewinde 17 auf, wobei die Stollenhülse 12 in der Außenkontur sechseckig ist und eine abgerundete Spitze aufweist. Der Stollen weist weiterhin einen Stollenfuß 13 mit abgesetztem Außengewinde 18 auf. Auf diesen ist die Stollenhülse 12 lösbar aufschraubbar. Zwischen Stollenfuß 13 und Stollenhülse 12 ist ein Elastomerkörper 20 angeordnet, der beim Einschrauben des Stollenfußes 13 in die Stollenhülse 12 zusammengedrückt wird und hierdurch eine Gegenkraft erzeugt. Diese ist erfindungsgemäß nur so stark zu bemessen, dass die beiden Teile selbst bei leichten Vibrationen nicht voneinander gelöst werden. Mit anderen Worten muß die Gegenkraft etwa im Bereich einer Handkraft liegen. Hierzu eignen sich beispielsweise Gummikörper oder Elastomerkörper. Denkbar wäre auch eine Schraubenfeder mit nur wenigen Gängen oder eine Tellerfeder. Der Stollenfuß weist einen Bereich 19 auf, der in eine Schwalbenschwanznut 9 einzuführen ist. Dieser Bereich 19 weißt an seinen orthogonalen Seitenpaaren zwei zueinander unterschiedliche Querschnittsflächenumrisse auf, von denen die eine kürzer als die andere ausgebildet ist. Das heißt, dass dieser Bereich 19 die Arretierelemente 3 bildet, indem er in Richtung seiner Längsachse unterschiedlich im Vergleich zu seiner Querachse ausgebildet ist. Hierdurch wird mit großem Vorteil erreicht, daß der erfindungsgemäße Stollen 2 irgendwo entlang der Längsseite derschwalbenschwanznut 9 in diese einführbar ist, da dessen Durchmesser kleiner als die engste Weite der Schwalbenschwanznut ist. Beide Stollenteile bestehen aus Stahl, vorzugsweise einem hochlegierten oder Edelstahl. Besonders einfach und effizient ist ein Vorschrauben von Stollenfuß 13 und Stollenhülse 12 außerhalb eines Hufeisens, Einführen der beiden miteinander verbundenen Stollenteile über die Stirnseite oder Längsseite der Schwalbenschwanznut in diese, Verschieben der miteinander verbundenen Teile an den gewünschten Arretierort innerhalb der Schwalbenschwanznut und abschließendes Anziehen der Schraubverbindung, vorzugsweise mit einem Maul- oder Ringschlüssel, der formschlüssig die sechseckige Außenkontur der Stollenhülse 12 umgreift. Dieser letzte Schritt führt mit großem Vorteil sowohl zu einer kraftschlüssigen Verbindung von Hufeisen 4 und Stollen 2 als auch zu einer formschlüssigen. Erstere wird durch Klemmen des Hufeisens 4 zwischen Stollenfuß 13 und -hülse 12 erreicht, letzteres durch Verdrehen des Stollenfußes 13, so dass sich dessen durchmessergrößere Seite über ihre Kanten in das Hufeisenmaterial einarbeitet.

Fig. 5 zeigt skizzenhaft eine Untersicht unter den Stollenfuß 13 aus Fig. 4. Gut zu erkennen ist der Gewindeabschnitt mit Außengewinde 18. Gut zu erkennen ist der konische Verlauf des Teiles 19 entlang der Achse B-B, sowie der rechteckige Verlauf entlang der Achse A-A. Der Abstand A-A entspricht dabei der Weite der Nutöffnung 9, so daß der Stollenfuß 13 in einer coaxialen Ausrichtung zur Längsachse der Nut 9 an jeder beliebigen Stelle entlang der Längsausdehnung der Nut 9 in diese einführbar ist. Der Abstand B-B entspricht jeweils der sich verjüngenden, korrespondierenden Weite innerhalb der Schwalbenschwanznut 9. Mit den beiden Kanten C gräbt sich der Stollenfuß 13 bei einer Verdrehung in oder gegen die Pfeilrichtung

### BEZUGSZEICHENLISTE

- 1: Stollensystem
- 2: Stollen
- 3: Arretierelement
- 4: Hufeisen
- 5: Arretiergegenelement
- 6: Stirnseite
- 7: Längsseite
- 8: Arretierposition
- 9: Nut
- 10: freies Arretierende
- 11: freier Schenkel
- 12: Stollenhülse
- 13: Stollenfuß
- 14: Schmiedeschlitten
- 15: Ende
- 16: Ende
- 17: Innengewinde
- 18: Außengewinde
- 19: Bereich
- 20: Elastomerkörper

## Patentansprüche

1. Stollensystem für Hufeisen (1), aufweisend wengistens einen Stollen (2) mit Arretierelementen (3) und wenigstens ein Hufeisen (4) mit komplementären Arretiergegenelementen (5), wobei die Arretiergegenelemente (5) als längliche Durchgangsöffnung ausgebildet sind, die an einer Stirnseite (6) des Hufeisens (4) offen ausgebildet ist oder die Arretiergegenelemente (5) als an einer Stirnseite (6) offene Nut (9), insbesondere Schwalbenschwanznut, im Hufeisen (4) ausgebildet sind, **dadurch gekennzeichnet, dass** die Arretiergegenelemente (5) für die Arretierelemente (3) von einer Stirnseite (6) und von einer Längsseite (7) des Hufeisens (4) aus zugänglich sind und eine kontinuierliche Verstellbarkeit einer Arretierposition (8) der Stollen (2) ermöglichen.

2. Stollensystem gemäß Anspruch 1, **dadurch gekennzeichnet, dass** die Arretierelemente (3) in die Arretiergegenelemente (5) einführbar ausgebildet sind.

3. Stollensystem für Hufeisen gemäß Anspruch 1, **dadurch gekennzeichnet, dass** die Arretiergegenelemente (5) der Krümmung des Hufeisens (4) mehr oder weniger folgend gebogen ausgebildet sind.

4. Stollensystem für Hufeisen gemäß einem der vorherigen Ansprüche, **dadurch gekennzeichnet, dass** die Nuttiefe <=60% der Dicke des Hufeisens (4) beträgt.

5. Stollensystem gemäß einem der vorhergehenden Ansprüche, **dadurch gekennzeichnet, dass** das Arretierelement (3) eines Stollens (2) einen T-förmigen Querschnitt mit zwei freien Arretierenden (10) aufweist, wobei die beiden freien Arretierenden (10) einstückig miteinander verbunden sind.

6. Stollensystem gemäß einem der vorhergehenden Ansprüche, **dadurch gekennzeichnet, dass** das Arretierelement (3) eines Stollens (2) stoffschlüssig mit dem Stollen (2) verbunden ausgebildet ist, insbesondere als ein in eine Ausnehmung des Stollens (2) eingebrachtes und dort hartgelötetes zylindrisches Element.

7. Stollensystem gemäß einem der Ansprüche 1 bis 4, **dadurch gekennzeichnet, dass** der Stollen (2) eine Stollenhülse (12) und einen mit dieser, vorzugsweise mittels einer Schraubverbindung, lösbar verbindbaren Stollenfuß (13) aufweist, wobei der Stollenfuß (13) die Arretierelemente (3) trägt.

8. Stollensystem gemäß Anspruch 7, **dadurch gekennzeichnet, dass** der Stollenfuß (13) im Bereich der Arretierelemente (3) einen ersten, zum Querschnittsflächenumriß der Durchgangsöffnung oder Nut (9) korrespondierenden Querschnittsflächenumriß aufweist und der zu diesem orthogonale zweite Querschnittsflächenumriß des Stollenfußes (13) im Bereich der Arretierelemente (3), in seiner größten Weite geringer ausgebildet ist, als der Querschnittsflächenumriß der Durchgangsöffnung oder Nut (9) in seiner jeweiligen geringsten Weite.

9. Stollensystem gemäß Anspruch 7 oder 8, **dadurch gekennzeichnet, dass** die Arretierung zwischen Stollen (2) und Hufeisen (4) form- und kraftschlüssig erfolgend ist.

10. Stollensystem gemäß einem der Ansprüche 6 bis 9, **dadurch gekennzeichnet, dass** Stollenhülse (12) und Stollenfuß (13) im Montagezustand zwischen sich eine Vorrichtung zur Erzeugung einer, der Schließbewegung entgegenwirkenden, Kraft aufnehmen, insbesondere einen gummielastischen Körper (20).

11. Stollensystem gemäß einem der vorherigen Ansprüche, **dadurch gekennzeichnet, dass** es einen in die Arretiergegenelemente (5) einführbaren Schmiedeschlitten (14) aufweist, dessen Querschnittsumriß zu demjenigen der Arretiergegenelemente (5) korrespondiert.

12. Stollensystem gemäß Anspruch 11, **dadurch gekennzeichnet, dass** der Schmiedeschlitten (14) zwei Enden (15, 16) mit unterschiedlichem Durchmesser aufweist.

13. Hufeisen (4) zur Verwendung mit dem Stollensystem gemäß einem der Ansprüche 1 bis 7, **dadurch gekennzeichnet, dass** es mindestens eine, an einer Stirnseite (6) des Hufeisens (4) offene Nut (9), insbesondere Schwalbenschwanznut, aufweist.
